# EUROPEAN PATENT SPECIFICATION

(11) **EP 2 730 400 B1**
(45) Date of publication and mention of the grant of the patent: **26.04.2017**
(21) Application number: 13192020.9
(22) Date of filing: 07.11.2013
(51) Int. Cl.: B30B 11/04, B30B 9/30, B30B 11/02, B29D 99/00, B29C 43/02, B30B 11/14, B30B 15/30, B29C 59/02, B30B 15/00, B30B 15/06, F16L 59/065

(54) **Method for molding a core of a vacuum insulation panel**
Verfahren zur Herstellung eines Kerns einer Vakuumisolierplatte
Procédé de moulage de noyau de panneau d'isolation sous vide

(30) Priority: 07.11.2012 KR 20120125370; 15.11.2012 KR 20120129401
(43) Date of publication of application: 14.05.2014
(73) Proprietor: OCI Company Ltd., Seoul 100-718 (KR)
(72) Inventor: Kim, Hae Duck, 570-739 Jeollabuk-do (KR); Kim, Hyun Cheol, 407-721 Incheon (KR); Lim, SinSup, 561-837 Jeollabuk-do (KR)
(74) Representative: Puschmann Borchert Bardehle Patentanwälte Partnerschaft mbB

(56) References cited:
- GB-A- 1 445 736
- GB-A- 2 206 523
- GB-A- 2 284 172
- JP-A- H0 491 894
- JP-A- 2008 062 273
- KR-A- 20110 096 658
- KR-A- 20120 028 048
- US-A- 4 564 547
- US-A1- 2001 041 146

## Description

The invention relates to a method for molding a core of a vacuum insulation panel, for example, to a method for molding a core of a vacuum insulation panel capable of efficiently mass-producing an enlarged core.

Insulation panels are used to limit transference of heat in buildings, pipes, and ice boxes where there is temperature difference between the interior and exterior thereof. General insulation panels or vacuum insulation panels are mostly used for the above purpose.

A general insulation panel has an insulation performance of 30mW/mK, whereas a vacuum insulation panel has a high insulation performance of 3-IOmW/mK, that is, approximately 3 to 10 times that of a general insulation panel. Such vacuum insulation panels are not widely used due to high material costs and difficulty of manufacturing technologies despite their excellent insulation performance.

Recently, due to significant advance of manufacturing technologies, various countries such as Germany, Great Britain, Japan, USA, Canada, Korea, and China etc. are making efforts to commercialize vacuum insulation panels, but high material costs and manufacturing process costs are becoming a burden.

A vacuum insulation panel consists of a molded insulation body made of inorganic substances and a gas insulation film covering the molded insulation body. The biggest feature of a vacuum insulation panel is that the interior of the molded insulation body is prepared in a vacuum condition. Herein, the molded insulation body that fills the inside of the vacuum insulation panel is called a core. One way to manufacture a core is to use a glass fiber compressed material or mixed powder including silica.

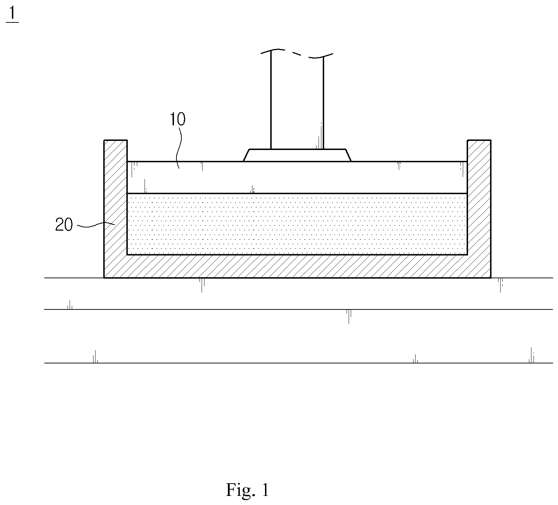

KR 20000067129 and GB 2206523 essentially disclose similar methods for manufacturing a core of a vacuum insulation panel. Herein below is explanation of these manufacturing methods with reference to Fig. 1.

Fig. 1 is a schematic view of a conventional apparatus for molding a core of a vacuum insulation panel.

With reference to Fig. 1, the molding apparatus 1 of Registered KR 20000067129 comprises a molding plate 10 pressing core material by an up-and-down movement and a molding cast 20 accommodating the core material. The molding apparatus 1 may press the core material to mold a core, distance the molding plate 10 away from the molding cast, and mold the core by discharging the core.

However, there occurs a problem where the core bends due to the difference between the core density of the upper surface that contacts the molding plate 10 and the core density of a lower surface that contacts the molding cast 20, and the so-called spring back effect where the core material tends to return to its original condition as the molding plate 10 that applies pressure to the core material is distanced from the core upon completion of a core molding process.

Accordingly, there is a limitation to enlarging the core since the size of the core is limited due to the range free of the spring back effect.

In addition, the air inside the molding cast 20 that failed to be discharged causes an attenuating effect, and thus extends the time it takes for the molding plate 10 to approach the core material to press the core material. This extends the time of the press-molding process and decreases the total output per time unit.

In JP 2008 062273 A a method for molding a core is disclosed. The method comprising supplying core material to a molding apparatus comprising an upper molding plate and lower molding plate facing each other; and a molding cast closing a molding space where the core is molded from outside; press molding the core material by moving the upper and lower molding plates along their approaching direction to press the core material, where in the press-molding comprises: moving set lower molding plate to approach an upper side of the molding cast with an upper side of the molding space opened, where the lower molding plate is raised to discharge any air remaining in the molding cast while improving the powder density.
closing the upper side of the molding space by moving the upper molding plate downwards when the lower molding plate reaches a predetermined location; and pressing the core material by moving the lower molding plate towards an upper side of said predetermined location; moving the press-molded core outside the molding cast while maintaining the same distance between the pair of molding plates; and discharging the molding core. Document KR1020110096658 discloses a method for molding a core of a vacuum insulation panel according to the preamble of claim 1. Therefore, a purpose of the present disclosure is to resolve the aforementioned problems of prior art, that is, to provide a method for molding a core of a vacuum insulation panel capable of preventing deformation of a core and embodying an enlarged core but within a reduced process time. The method for molding a core of a vacuum insulation panel according to claim 1 resolves the aforementioned problems. In the general aspect of the method, at the press-molding, the distance between the upper molding plate and lower molding plate may be narrower than a predetermined thickness of a core.

In the general aspect of the method, the distance between the upper molding plate and lower molding plate may be 80% to 97% of the predetermined thickness of a core.

In the general aspect of the method, at the moving, the pair of molding plates may move along the same direction at the same time.

In the general aspect of the method, the pair of molding plates may be synchronized-controlled,

In the general aspect of the method, the molding apparatus may further comprise a presser connected to each of the pair of molding plates; and a controller controlling the presser to perform a synchronized-control on the pair of molding plates.

In the general aspect of the method, the presser may be a hydraulic cylinder of a servo-control system or comprises a servo-motor and ball screw.

According to the present disclosure, there is provided a method for molding a core of a vacuum insulation panel capable of applying pressure to a core right before the core is discharged so as to prevent deformation of the core by the spring back effect, and preventing deformation of the core, thereby efficiently manufacturing a core of a desired size by a user.

In addition, according to the present disclosure, it is possible to reduce the time of the press-molding process by minimizing the resistance due to the air inside the molding space.

Furthermore, according to the present disclosure, since the volume of the apparatus for molding a core can be reduced, it is possible to save space that the molding apparatus occupies while mass-producing cores.

Other features and aspects may be apparent from the following detailed description, the drawings, and the claims.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. In the drawings is shown:
- Fig. 1: a schematic view of an apparatus for molding a core of a vacuum insulation panel according to prior art;
- Fig. 2: a schematic front view of an apparatus for molding a core of a vacuum insulation panel according to an exemplary embodiment of the present disclosure;
- Fig. 3: a schematic plane view of an apparatus for molding a core of a vacuum insulation panel according to Fig. 2;
- Fig.4: a schematic view of a press-molder in an apparatus for molding a core of a vacuum insulation panel according to Fig. 2;
- Fig. 5: a schematic flowchart of a method for molding a core of a vacuum insulation panel according to an exemplary embodiment of the present disclosure;
- Fig. 6: and Fig. 7 are schematic views of a step of supplying raw material in a method for molding a core of a vacuum insulation panel according to Fig. 5;
- Fig. 8: is a schematic view of a step of press-molding in a method for molding a core of a vacuum insulation panel according to Fig. 5;
- Fig. 9: is a schematic view of controlling an upper molding pate and lower molding plate through synchronization control in a step of press-molding according to Fig. 3, and
- Fig. 10: is a schematic view of a step of moving in a method for molding a core of a vacuum insulation panel according to Fig. 5.

The following detailed description is provided to assist the reader in gaining a comprehensive understanding of the methods, apparatuses, and/or systems described herein. Accordingly, various changes, modifications, and equivalents of the systems, apparatuses and/or methods described herein will be suggested to those of ordinary skill in the art. Also, descriptions of well-known functions and constructions may be omitted for increased clarity and conciseness.

Herein below is detailed description of a method for molding a core of a vacuum insulation panel according to an exemplary embodiment of the present disclosure with reference to the attached drawings.

Prior to explaining a method for molding a core of a vacuum insulation panel according to an exemplary embodiment of the present disclosure S100, herein below is explanation on an apparatus for molding a core of a vacuum insulation panel where the method for molding a core of a vacuum insulation panel is performed.

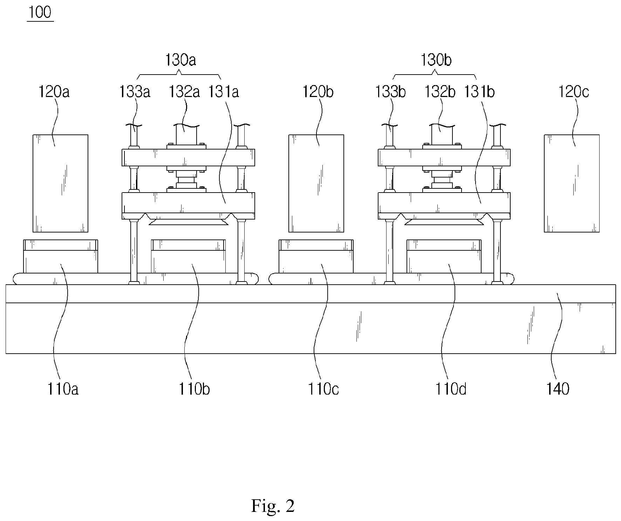

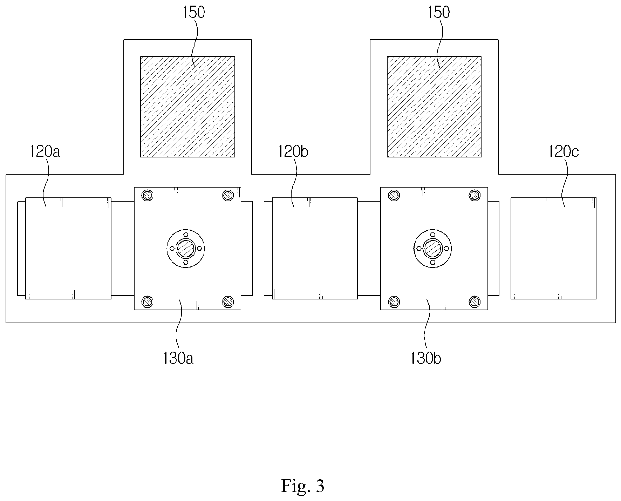

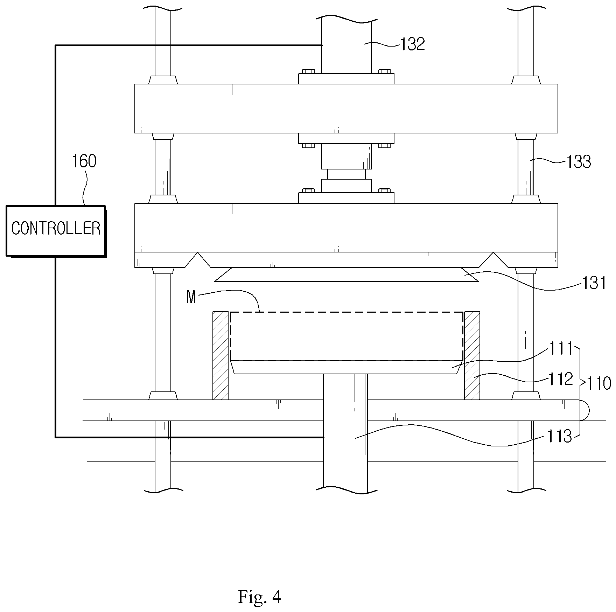

Fig. 2 is a schematic front view of an apparatus for molding a core of a vacuum insulation panel according to an exemplary embodiment of the present disclosure, Fig. 3 is a schematic plane view of an apparatus for molding a core of a vacuum insulation panel according to Fig. 2, and Fig. 4 is a schematic view of a press-molder in an apparatus for molding a core of a vacuum insulation panel according to Fig. 2.

With reference to Fig. 2 to 4, an apparatus 100 for molding a core of a vacuum insulation panel 100 according to an exemplary embodiment of the present disclosure comprises a molding cast part 110, raw material supplier 120, press-molder 130, carrier 140, and receiver 150. The apparatus 100 for molding a core of a vacuum insulation panel is capable of supplying core material to different molding cast parts and pressing the core material at the same time, and then providing the core material to an adjacent press-molder 130 and raw material supplier 120 through the carrier, thereby reducing the time of manufacturing a core.

The molding cast 110 is provided in plural disposed along one direction, and provides a molding space M where core material is supplied and pressed. The molding cast 110 comprises a lower molding plate 111, molding cast 112, and lower presser 113.

When provided on the raw material supplier 120 to be explained herein below, the lower molding plate 111 is provided with core material on the upper surface, and when provided on the press-molder 130 to be explained herein below, the lower molding plate 111 is a plate member that transmits the pressing force to the core material provided on the upper surface.

In other words, when the molding cast part 110 is provided with core material from the raw material supplier 120 to be explained herein below, the lower molding plate III is provided with core material on its upper surface and then the core material is prepared ready to be pressed by the press-molder 130 to be explained herein below, that is .the upper portion of the core material is disposed in parallel with the upper surface of the lower molding plate 110.

Meanwhile, there may be further performed a planarization process for planarizing the upper portion of the core material.

The molding cast 112 forms a molding space M which is the space where the core material is supplied and press-molded, and closes the exterior surface of the molding space M from outside and thus when the core material is pressed by the press-molder 10 be explained herein below, supports the pressing force applied to the core. It is a member that determines the shape of the core being press-molded.

That is, the shape of the molding space M formed in the molding cast 112 has a big effect on the shape of the core being press-molded, and thus the core is molded practically the same as the shape of the molding space M. Of course, the volume may expand due to the spring back effect caused by the air gap inside the core and the elasticity of the raw material itself.

Meanwhile, in an exemplary embodiment of the present disclosure, in the molding cast 112, the lower molding plate III is accommodated, and thus the lower molding plate III is moveable along the inner surface of the molding cast 112. [0046] Furthermore, the cross-sectional area of the molding cast 112 is smaller than the surface facing the molding space M on the upper molding plate 131 so that the upper molding plate 131 contacts the upper surface of the molding cast 112 and the movement is limited.

According to an exemplary embodiment of the present disclosure, the molding cast 112 may be provided as a square cast where its upper side and lower side are open.

The lower presser 113 is connected to the lower molding plate 111 and applies pressure to the lower molding plate 111 to press the core material.

That is, the lower presser 113 sends the force to the lower molding pate 111 so that the lower molding plate 111 can move upwards, and when the movement of the lower molding plate 111 is limited by the core material and the upper molding plate 131 to be explained herein below, the lower presser presses the core material with the force sent to the lower molding plate 111.

Meanwhile, according to an exemplary embodiment of the present disclosure, when moving the press-molded core to the molding cast 112, more exactly to the exterior of the molding space M, the lower molding plate 111 and the upper molding plate 131 to be explained herein below move in the same direction while maintaining a practically same distance from each other.

To embody the aforementioned, the lower presser 113 may desirably be a hydraulic cylinder of a servo-control system or comprise a servo motor and ball screw.

That is, in the case where the lower presser 113 is a hydraulic cylinder of a servo-control system, it is possible to make fine manipulation of 0.1 mm unit, and thus it is possible to control fine movements of the lower molding plate 111.

In addition, in the case where the lower presser 113 is a servo-motor and ball screw, it is also possible to make fine manipulation as aforementioned, and thus it is possible to control fine movements of the lower molding plate 111 as well.

The raw material supplier 120 is provided on the upper side of the molding cast part 110 to provide core material to the molding space M.

Meanwhile, the raw material supplier 120 is a well-known technology, and thus detailed explanation thereof is omitted.

The press-molder 130 is provided on the upper side of the molding cast part 110 between the raw material suppliers 120, and receives the molding cast part 110 where core material is supplied to the molding space M through the raw material supplier 120 and presses the molding space M. The press-molder 130 comprises an upper molding plate 131, upper presser 132, and guide 133.

The upper molding plate 131 is a member provided on the upper side of the molding cast part 110 to close the upper side of the frame 112.

According to the present invention, the cross-sectional area of the surface on the upper molding plate 131 facing the molding cast part 110 is bigger than the cross-sectional area of the molding cast part 110.

The upper presser 132 is connected to the upper molding plate 131 and applies force to the upper molding plate 131.

That is, when the force is applied to the upper molding plate 131 through the upper presser 132, the upper molding plate 131 moves downwards, and in the present invention, the upper molding plate 131 moves until the lower surface of the upper molding plate contacts the molding cast 112 and closes the upper side of the molding cast 112.

According to the exemplary embodiment of the present disclosure, the upper presser 132 may be a hydraulic cylinder of a servo-control system or comprise a servo-motor and ball screw just as in the lower presser 113 to make fine manipulations of the movement of the upper molding plate 131.

In addition, in the exemplary embodiment of the present disclosure, the upper molding plate 131 contacts the molding cast 112, and thus when the upper side of the molding cast 112 is closed, the lower molding plate 111 moves upwards to press the core material.

A plurality of guides 133 are extended in a gravity direction but to penetrate the upper molding plate 131, thereby guiding the movement of the upper molding plate 131 so that the upper molding plate 131 can move in a gravity direction.

For the core to be manufactured in a predetermined shape, more specifically, in a shape practically the same as the shape of the molding space M, a predetermined pressure must be applied with the location of the core material secured, and when the upper molding plate 131 makes a movement other than along the gravity direction, the location of the core material may change during the press-molding. Therefore, in the exemplary embodiment of the present disclosure, in the case where a plurality of guides 133 that extend along the gravity direction that is perpendicular to the upper surface of the core material guide the movement path of the upper molding plate 131, the upper molding plate 131 may be guided to make only the movements perpendicular to the upper surface of the core material.

However, the movement of the upper molding plate 131 through the guide 133 may obviously be adjusted differently according to the shape of the core material.

In addition, when discharging the press-molded core from the molding space M, the spring back effect may occur, that is a phenomenon where the volume increases due to the air gap inside the core and the elasticity of the core material itself, and thus, in consideration of this spring back effect, it is possible to provide the distance between the lower molding plate 111 and upper molding plate 131 that is narrower than the thickness of the predetermined core in the process of press-molding in the press-molder 130.

Meanwhile, in the case where a press-molding process is performed by the press-molder 130, a core may be molded by performing a step of sending the lower molding plate 111 near the upper side with the upper side of the molding space M opened S121; a step of closing the upper side of the molding space M by moving the upper molding plate 131 downwards when the lower molding plate 111 reaches a predetermined location S122; and a step of pressing the core material by moving the lower molding plate 111 towards the upper side of the predetermined location S123. These operations will be explained herein below.

The carrier 140 is disposed on the lower side of the raw material supplier 120 and the press-molder 130, and supplies the core material and transfers the plurality of molding cast parts 110 that are press-molded to the press-molder 130 and to the raw material supplier 120.

Herein, the carrier 140 transfers the molding cast part 110 along one direction, and makes each molding cast part 110 to supply and press-mold the core material before and after the transfer.

The receiver 150 is a place connected to the press-molder 130 where the press-molded core is received through the press-molder 130.

That is, since the molding cast part 110 that completed the process in the press-molder 130 must be provided to the raw material supplier 120 and receives core material, it is desirable to discharge the molded core from the molding space M.

Consequently, the completed core is discharged from the molding space M, and the molding cast part 110 is transferred from the press-molder 130 to the raw material supplier 120 to be supplied with core material.

Meanwhile, in the exemplary embodiment of the present disclosure, the molded core receives force so as to move as high as the lower molding plate 111 is exposed from the molding cast 112 and then to move towards the receiver 150.

Meanwhile, in the exemplary embodiment of the present disclosure, a controller 150 may be further provided to perform a synchronized control on the movement of the lower molding plate 111 and upper molding plate 131.

Herein, a synchronization control is a method of making a precise control of the flow of controls between the processes when a plurality of processes is being made within a particular period of time.

That is, for the lower molding plate 111 and upper molding plate 131 to move while maintaining a certain the distance there between, as the lower molding plate 111 moves a predetermined length through the lower presser 113, the upper molding plate 131 must move a predetermined length through the upper presser 132 at the same time.

Therefore, by making a precise control of the movement of the upper molding plate 131 and lower molding plate 111 through the synchronization control by the controller 160, it becomes possible to move the upper molding plate 131 and lower molding plate 111 in the same direction while maintaining practically the same distance there between.

With reference to Figs. 2 to 4 the system for manufacturing a core of a vacuum insulation panel according to an exemplary embodiment of the present disclosure comprises three raw material suppliers 120 distanced from one another, two press-molders 130 disposed between the raw material suppliers 120, and four molding cast parts 110.

That is, the aforementioned are disposed in the order of the first raw material supplier 120a, followed by first press-molder 130a, followed by second raw material supplier 120b, followed by second press-molder 130b, and followed by third raw material supplier 120c, and on the lower end of the first raw material supplier 120a to the second press-molder 130b, the molding cast parts 110a, 110b, 110c, 110d are provided.

Herein, for convenience of explanation, the direction from the first raw material supplier 120a towards the third raw material supplier 120c is defined as a first direction, while the direction from the third raw material supplier 120c towards the first raw material supplier 120a is defined as a second direction.

Meanwhile, it is desirable that the first raw material supplier 120a, first press-molder 130a, second raw material supplier 120b, second press-molder 130b, and third raw material supplier 120c are disposed by an equal distance from one another so as to efficiently transfer the molding cast part 110 through the carrier 140.

Meanwhile, the number of the molding cast parts 110 may be one less than the number of the raw material supplier 120 and the number of the press-molder 130 combined, and the molding cast parts 130 may be disposed successively along the first direction.

This is to perform the process of manufacturing a core successively, and depending on the transferring direction of the molding cast parts 110, only one of the first raw material supplier 120a and third raw material supplier 120c is selectively operated.

Herein, the first raw material supplier 120a and third raw material supplier 120c perform their original function of supplying the core material to the molding space M only when the molding cast parts 110 are provided on the lower portion thereof, and the number of the molding cast parts 110 are one less than the number of the raw material supplier 120 and the number of the press-molder 130 combined, and thus the molding cast part 110 is disposed on the lower portion of only one of the two, so that the first raw material supplier 120a and third raw material supplier 120c do not operate at the same time.

That is, in the case where the molding cast part 110 is not transferred, the third raw material supplier 120c does not operate, and in the case where the molding cast part 110 is transferred in the first direction by the carrier 140, the first raw material supplier 120a does not operate. Likewise, in the case where the molding cast part 110 is transferred along the second direction through the carrier 140, the third raw material supplier 120c does not operate, and subsequent process is repeated.

The carrier 140 is disposed on the lower side of the molding cast part 110 to support the molding cast part 110.

In addition, the receiver 150 is provided on the front or rear side of where the press-molder 130 is to be installed to provide a place for receiving the press-molded core, and as long as it is located within a range that does not affect transferring the molding cast part 110, there is no particular limitation to the location.

Meanwhile, the aforementioned is merely an exemplary embodiment of the present disclosure for convenience of explanation, and there is no limitation to the specific numbers, or installation location thereof.

Herein below is explanation on a method for molding a core of a vacuum insulation panel according to an exemplary embodiment of the present disclosure that may be performed through the aforementioned apparatus for manufacturing a core of a vacuum insulation panel.

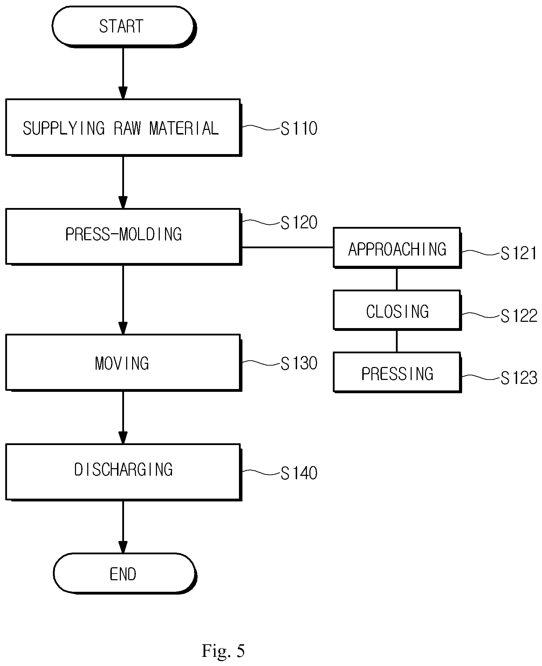

Fig. 5 is a schematic flowchart of a method for molding a core of a vacuum insulation panel according to an exemplary embodiment of the present disclosure.

With reference to Fig. 5, the method for molding a core of a vacuum insulation panel according to an exemplary embodiment of the present disclosure S100 is for preventing the core from bending by maintaining the core density between the surfaces facing each other of the core, the method comprising a step of supplying raw material S110, a step of press-molding S120, a step of moving S130, and a step of discharging S140.

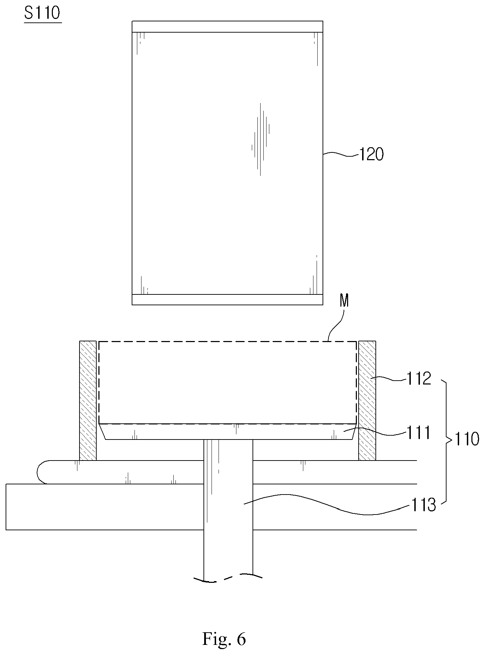

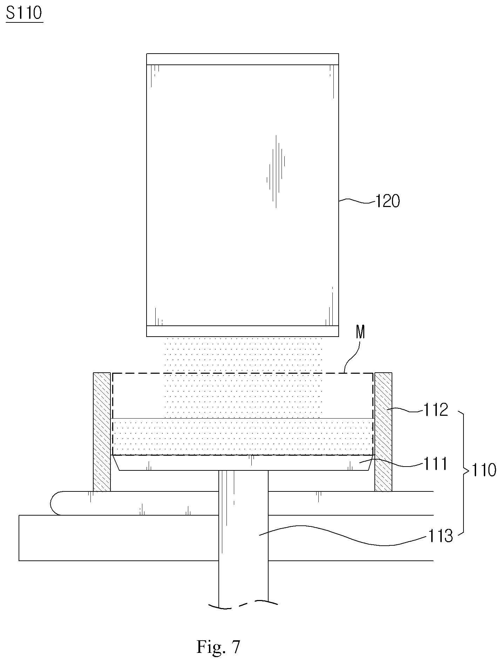

Fig. 6 and Fig. 7 are schematic views of the step of supplying raw material in a method for molding a core of a vacuum insulation panel according to Fig. 5.

With reference to Fig. 6 or Fig. 7, the step of supplying the raw material S110 is a step of providing core material inside the molding space M through the raw material supplier 120.

By this step, the core material supplied inside the molding space M is supported by the lower molding plate 111 accommodated inside the molding cast 112.

Meanwhile, the step of supplying raw material S110 may further include a planarization process of planarizing the core material.

With raw material supplied inside the molding space M through the step of supplying raw material S110, the closer to the point where the core material is supplied, the core material is concentrated, whereas the farther away from the point where core material is supplied, the amount decrease, and thus there is a need to evenly disperse the core material and planarize the upper surface of the core material.

Therefore, with the core density evenly dispersed by further performing a planarization step to evenly dispersing the upper surface of the core material, it is possible to perform the step of press-molding S120 to be explained herein below.

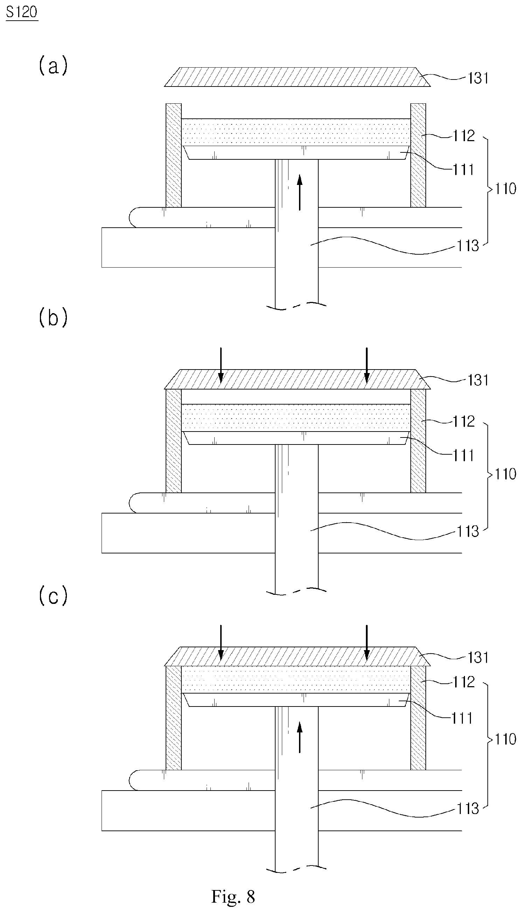

Fig. 8 is a schematic view of the step of press-molding in a method for molding a core of a vacuum insulation panel according to Fig. 5. Herein Fig. 8(a) is a schematic view of a step of approaching, Fig. 8(b) is a schematic view of a step of closing, and FIG. 8(e) is a schematic view of a step of pressing.

The step of press-molding S120 is a step where when the molding cast part 110 where the core material is supplied through the carrier 140 is provided to the press-molder 130, the upper molding plate 131 and lower molding plate 111 moves in their approaching direction, thereby press-molding the core material provided inside the molding space M. The step of press-molding S120 comprises a step of approaching S121, closing S122, and pressing S123.

With reference to Fig. 8(a), the step of approaching S121 is a step of moving the lower molding plate 111 upwards with the upper side of the molding space M opened, and as the air inside the molding space M flows upwards when the lower molding plate 111 moves upwards, its movement is not limited by the air resistance.

With reference to Fig. 8(b), the step of closing S122 is a step of moving the upper molding plate 131 downwards to close the upper side of the molding space M when the lower molding plate 111 reaches the predetermined location.

Herein, it is desirable that the predetermined location is a location where the core material contacts both the lower molding plate 111 and upper molding plate 131, and more desirably the predetermined location may be lower than the aforementioned predetermined location.

Meanwhile, when the lower molding plate 111 reaches the predetermined location, the upper side is closed by the upper molding plate 131, and thus even when the air inside the molding space M is discharged easily, it is possible to proceed to the step of pressing S123 to be explained here below.

With reference to Fig. 8(c), the step of pressing S123 is a step of moving the lower molding plate 111 to the upper side of the predetermined location and pressing the core material. Herein, the step of pressing S123 may be performed at the same time as the aforementioned step of closing S122 or after the step of closing S122 is completed.

Meanwhile, the step of pressing S120 is performed through the aforementioned step of approaching S121, closing S122, and pressing S123, thereby reducing the time necessary in a press-molding process than in prior art.

That is, in prior art where the upper molding plate is lowered to perform a press-molding process with the lower side closed, the movement of the upper molding plate is limited by the resistance of air inside the molding space, which caused a problem of increasing the time necessary in a press-molding process, but according to an exemplary embodiment of the present disclosure, with the upper side of the molding space M opened, the lower upper molding plate 111 is moved upwards until the predetermined location, thereby reducing the section affected by air resistance and reducing the time necessary in a press-molding process.

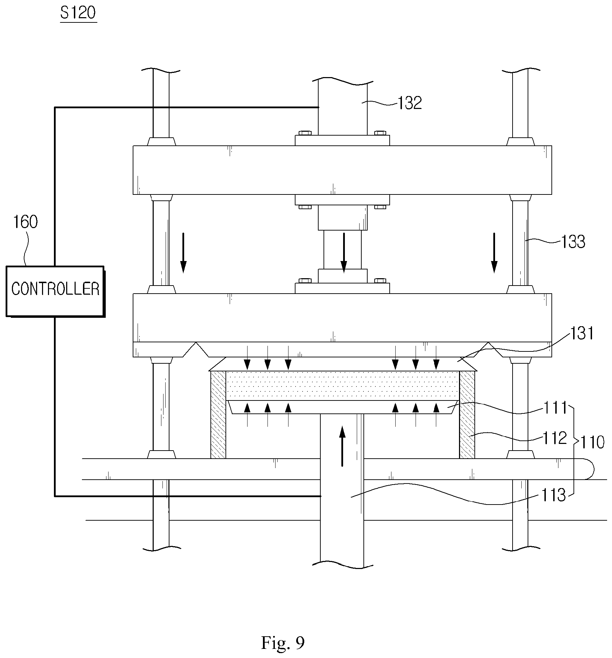

Fig. 9 is a schematic view of the upper molding plate and lower molding plate being controlled through synchronized control in the step of press-molding according to Fig. 8.

With reference to Fig. 9, in the exemplary embodiment of the present disclosure, the lower presser 113 and upper presser 132 are synchronized-controlled through the controller 160, thereby maintaining the core density on the upper surface and lower surface of the core.

In addition, it is desirable that the distance between the lower molding plate 111 and upper molding plate 131 is narrower than the predetermined thickness considering that the volume will partially expand due to the repulsive force between the atoms of the core material.

Herein, the distance between the lower upper molding plate 111 and upper molding plate 131 may be 3 to 20% narrower than the thickness of the predetermined core, that is, 80 to 97% thickness. Meanwhile, at the step of press-molding S120, the upper and lower side of the core material inside the molding space Mare closed by the lower and upper molding plates 111, 131, respectively, while the exterior surface is closed by the molding cast, and accordingly, the core material hardens.

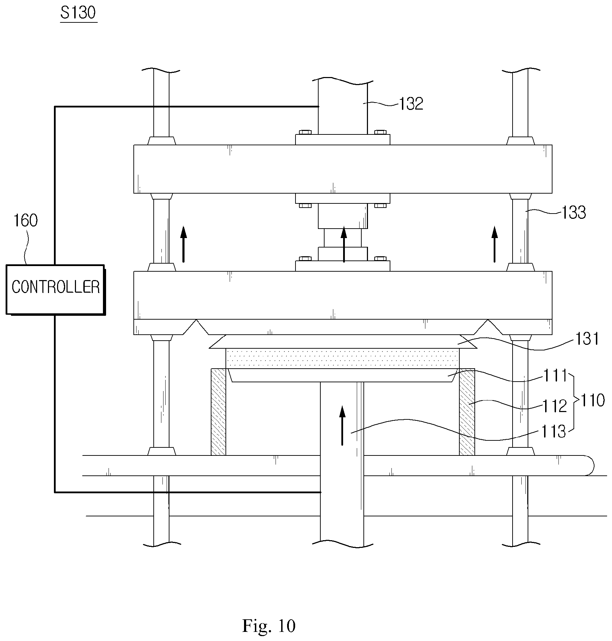

Fig. 10 is a schematic view of a step of moving in a method for molding a core of a vacuum insulation panel according to Fig. 3.

With reference to Fig. 10, the step of moving S130 is a step of moving the press-molded core towards the exterior of the molding cast 112, preparing to discharge the core.

At this step of moving S130, it is desirable that the upper molding plate 131 and lower molding plate 111 moves along the same direction while maintaining certain there between so as to prevent deformation of the core by the spring back effect.

That is, it is desirable that the upper molding plate 131 and lower molding plate 111 both move upwards but at a same speed.

That is, as the controller 160 makes a synchronized control on the pressers 113, 132, the upper molding plate 131 and lower molding plate 111 are synchronized-controlled, thereby maintaining practically a same distance between the upper molding plate 131 and lower molding plate 111.

In the exemplary embodiment of the present disclosure, the lower presser 113 and upper presser 132 are provided as hydraulic cylinders of servo-control system capable of adjusting the fine movement by 0.1 mm unit, but this may change depending on the thickness of the predetermined core.

Meanwhile, in the exemplary embodiment of the present disclosure, the step of moving S130 moves the lower molding plate 111 and upper molding plate 131 until at least the upper surface of the lower molding plate 111 and the upper surface of the molding cast 112 are located on the same surface.

The step of discharging S140 is a step of discharging the core moved to the exterior of the molding cast 112 at the step of moving S130.

Herein, the step of discharging S140 is a well-known technology, and thus detailed description is omitted.

A number of examples have been described above. Nevertheless, it will be understood that various modifications may be made. For example, suitable results may be achieved if the described techniques are performed in a different order and/or if components in a described system, architecture, device, or circuit are combined in a different matter and/or replaced or supplemented by other components or their equivalents. Accordingly, other implementations are within the scope of the following claims.

### List of reference signs

- 100: Apparatus for molding core of vacuum insulation panel
- 110: Molding cast part
- 111: lower molding plate
- 112: molding cast
- 113: lower presser
- 120: Raw material supplier
- 120a: first raw material supplier
- 120b: second raw material supplier
- 120c: third raw material supplier
- 130: Press-molder
- 131: upper molding plate
- 132: upper presser
- 133: guide
- 140: Carrier
- 150: Receiver
- 160: Controller
- S110: Supplying raw material
- S120: Press-molding
- S130: Moving
- S140: Discharging

## Claims

1. A method for molding a core of a vacuum insulation panel, the method comprising:
supplying core material (S110) to a molding apparatus (100) comprising: an upper molding plate (131) and lower molding plate (111) facing each other; and a molding cast (112) closing a molding space (M) where the core is molded from outside;
**characterized in that** the method comprises the following steps :
press-molding (S120) the core material by moving the upper and lower molding plates (131, 111) along their approaching direction to press the core material, wherein the press-molding (S120) comprises:
moving the lower molding plate (111) to approach an upper side of the molding cast (110) with an upper side of the molding space (M) opened (S121);
closing the upper side of the molding space (M) by moving the upper molding plate (131) downwards when the lower molding plate (111) reaches a predetermined location, near to the upper side of the molding space (M) (S122); and
pressing the core material by moving the lower molding plate (111) towards an upper side of the predetermined location (S123);
moving the press-molded core outside the molding cast (S130) while maintaining the same distance between the pair of molding plates (131, 111); and
discharging (S140) the molded core, wherin
a cross-sectional area of the surface of the upper molding plate (131) facing the molding cast (112) is bigger than a cross-sectional area of the molding cast (112); and when a force is applied to the upper molding plate (131), the upper molding plate (131) moves downwards,
and the upper molding plate (131) moves until a lower surface of the upper molding plate contacts the molding cast (112) and closes an upper side of the molding cast (112).

2. The method according to claim 1, **characterized in that** at the press-molding (S120), the distance between the upper molding plate (131) and lower molding plate (111) is narrower than a predetermined thickness of a core.

3. The method according to claim 2, **characterized in that** the distance between the upper molding plate (131) and lower molding plate (111) is 80% to 97% of the predetermined thickness of a core.

4. The method according to any one of claims 1 to 3, **characterized in that** at the moving, the pair of molding plates (131, 111) move along the same direction at the same time.

5. The method according to claim 4, **characterized in that** the pair of molding plates (131, 111) is synchronized-controlled.

6. The method according to claim 5, **characterized in that** the molding apparatus (100) further comprises:
a presser (132, 113) connected to each of the pair of molding plates(131, 111); and
a controller (160) controlling the presser (132,113) to perform a synchronized-control on the pair of molding plates (131, 111).

7. The method according to claim 6, **characterized in that** the presser (132, 113) is operated by a hydraulic cylinder of a servo-control system.

8. The method according to claim 6 or 7, **characterized in that** the presser (132,113) comprises at least one of a servo-motor and a ball screw.

## Patentansprüche

1. Verfahren zum Formen eines Kerns einer Vakuumisolierplatte, wobei das Verfahren folgendes umfasst:
Zuführen von Kernmaterial (S110) an eine Formvorrichtung (100), die folgendes umfasst: eine obere Formplatte (131) und eine untere Formplatte (111), die einander zugewandt sind; und
eine Formmanschette (112), die einen Formraum (M), in dem der Kern geformt wird, von außen schließt;
**dadurch gekennzeichnet, dass** das Verfahren die folgenden Schritte umfasst. Pressformen (S120) des Kernmaterials durch Bewegen der oberen und der unteren Formplatte (131, 111) in Richtung aufeinander zu, um dadurch das Kernmaterial zu pressen, wobei das Pressformen (S120) folgendes umfasst:
Bewegen der unteren Formplatte (111) auf eine Oberseite der Formmanschette (112) zu, bei geöffneter Oberseite des Formraumes (M) (S121);
Schließen der Oberseite des Formraumes (M) durch Bewegen der oberen Formplatte (131) nach unten, wenn die untere Formplatte (111) eine vorbestimmte Stelle in der Nähe der Oberseite des Formraumes (M) erreicht (S122); und
Pressen des Kernmaterials durch Bewegen der unteren Formplatte (111) auf eine Oberseite der vorbestimmten Stelle zu (S123);
Bewegen des pressgeformten Kerns außerhalb der Formmanschette (S130) unter Beibehaltung des gleichen Abstands zwischen dem Formplattenpaar (131, 111); und
Ausstoßen (S140) des geformten Kerns; wobei
eine der Formmanschette (112) zugewandte Querschnittsfläche der Oberfläche der oberen Formplatte (131) größer ist als eine Querschnittsfläche der Formmanschette (112); und bei Aufbringen einer Kraft auf die obere Formplatte (131) sich die obere Formplatte (131) nach unten bewegt, und sich die obere Formplatte (131) bewegt, bis eine untere Fläche der oberen Formplatte die Formmanschette (112) kontaktiert und eine Oberseite der Formmanschette (112) schließt.

2. Verfahren nach Anspruch 1, **dadurch gekennzeichnet, dass** beim Pressformen (S120) der Abstand zwischen der oberen Formplatte (131) und der unteren Formplatte (111) geringer ist als eine vorbestimmte Dicke eines Kerns.

3. Verfahren nach Anspruch 2, **dadurch gekennzeichnet, dass** der Abstand zwischen der oberen Formplatte (131) und der unteren Formplatte (111) 80% bis 97% der vorbestimmten Dicke eines Kerns beträgt.

4. Verfahren nach einem der Ansprüche 1 bis 3, **dadurch gekennzeichnet, dass** sich bei der Bewegung das Formplattenpaar (131, 111) gleichzeitig entlang derselben Richtung bewegt.

5. Verfahren nach Anspruch 4, **dadurch gekennzeichnet, dass** das Formplattenpaar (131, 111) synchronisiert gesteuert ist.

6. Verfahren nach Anspruch 5, **dadurch gekennzeichnet, dass** die Formvorrichtung (100) des Weiteren folgendes umfasst:
Einen Presser (132, 113), der mit jeder Formplatte des Formplattenpaares (131, 111) verbunden ist; und
eine Steuerung (160), die den Presser (132, 113) derart steuert, dass dieser eine synchronisierte Steuerung des Formplattenpaares (131, 111) durchführt.

7. Verfahren nach Anspruch 6, **dadurch gekennzeichnet, dass** der Presser (132, 113) durch einen Hydraulikzylinder einer Servosteuerung betrieben wird.

8. Verfahren nach Anspruch 6 oder 7, **dadurch gekennzeichnet, dass** der Presser (132, 113) wenigstens entweder einen Servomotor oder eine Kugelrollspindel umfasst.

## Revendications

1. Procédé pour mouler un noyau d'un panneau d'isolation sous vide, le procédé comprenant :
la fourniture du matériau de noyau (S110) à un appareil de moulage (100) comprenant : une plaque de moulage supérieure (131) et une plaque de moulage inférieure (111) se faisant face ; et une coulée de moulage (112) fermant un espace de moulage (M) où le noyau est moulé de l'extérieur ;
**caractérisé en ce que** le procédé comprend les étapes suivantes :
le moulage par compression (S120) du matériau de noyau en déplaçant les plaques de moulage supérieure et inférieure (131, 111) le long de leur direction d'approche pour presser le matériau de noyau, dans lequel le moulage par compression (S120) comprend :
le déplacement de la plaque de moulage inférieure (111) pour s'approcher d'un côté supérieur de la coulée de moulage (112) avec un côté supérieur de l'espace de moulage (M) ouvert (S121);
la fermeture du côté supérieur de l'espace de moulage (M) en déplaçant la plaque de moulage supérieure (131) vers le bas lorsque la plaque de moulage inférieure (111) atteint un emplacement prédéterminé, à côté du côté supérieur de l'espace de moulage (M) (S122) ; et
la compression du matériau de noyau en déplaçant la plaque de moulage inférieure (111) vers un côté supérieur de l'emplacement prédéterminé (S123) ;
le déplacement du noyau moulé par compression à l'extérieur de la coulée de moulage (S130) tout en conservant la même distance entre la paire de plaques de moulage (131, 111) ; et
la décharge (S140) du noyau moulé, dans lequel
une surface transversale de la surface de la plaque de moulage supérieure (131) faisant face à la coulée moulage (112) est supérieure à une surface transversale de la coulée de moulage (112) ; et lorsqu'une force est appliquée sur la plaque de moulage supérieure (131), la plaque de moulage supérieure (131) descend, et la plaque de moulage supérieure (131) se déplace jusqu'à ce qu'une surface inférieure de la plaque de moulage supérieure, vienne en contact avec la coulée de moulage (112) et ferme un côté supérieur de la coulée de moulage (112).

2. Procédé selon la revendication 1, **caractérisé en ce que** lors du moulage par compression (S120), la distance entre la plaque de moulage supérieure (131) et la plaque de moulage inférieure (111) est inférieure à une épaisseur prédéterminée d'un noyau.

3. Procédé selon la revendication 2, **caractérisé en ce que** la distance entre la plaque de moulage supérieure (131) et la plaque de moulage inférieure (111) représente de 80 % à 97 % de l'épaisseur prédéterminée d'un noyau.

4. Procédé selon l'une quelconque des revendications 1 à 3, **caractérisé en ce qu'**au moment du déplacement, la paire de plaques de moulage (131, 111) se déplace le long de la même direction en même temps.

5. Procédé selon la revendication 4, **caractérisé en ce que** la paire de plaques de moulage (131, 111) est commandée de manière synchronisée.

6. Procédé selon la revendication 5, **caractérisé en ce que** l'appareil de moulage (100) comprend en outre :
un dispositif de pression (132, 113) raccordé à chacune de la paire de plaques de moulage (131, 111) ; et
un organe de commande (160) commandant le dispositif de pression (132, 113) pour réaliser une commande synchronisée sur la paire de plaques de moulage (131, 111).

7. Procédé selon la revendication 6, **caractérisé en ce que** le dispositif de pression (132, 113) est actionné par un cylindre hydraulique d'un système asservi.

8. Procédé selon la revendication 6 ou 7, **caractérisé en ce que** le dispositif de pression (132, 113) comprend au moins l'un parmi un servomoteur et une vis sphérique.
